# FASCICULE DE BREVET EUROPEEN

(11) **EP 2 409 950 B1**
(45) Date de publication et mention de la délivrance du brevet: **12.07.2017**
(21) Numéro de dépôt: 11290245.7
(22) Date de dépôt: 27.05.2011
(51) Int. Cl.: C01B 3/38, C01B 3/48, C01B 3/56, C01B 3/52

(54) **Procédé de production d'hydrogène avec purge à pression intermediaire**
Verfahren zur Erzeugung von Wasserstoff mit Zwischendruckspülung
Method for producing hydrogen with intermediate pressure purge

(30) Priorité: 23.07.2010 FR 1003089
(43) Date de publication de la demande: 25.01.2012
(73) Titulaire: IFP Énergies nouvelles, 92852 Rueil-Malmaison Cedex (FR)
(72) Inventeur: Fischer, Beatrice, 69005 Lyon (FR); Giroudiere, Fabrice, 69530 Orlienas (FR); Ambrosino, Jean-Louis, 69360 Ternay (FR); Thomas, Michel, 69003 Lyon (FR)

(56) Documents cités:
- EP-A1- 1 146 009
- EP-A1- 1 582 502
- EP-A1- 2 168 913
- US-A1- 2003 191 196
- US-A1- 2010 037 521

## Description

La présente invention concerne le domaine de la production d'hydrogène, et plus particulièrement un procédé de production d'hydrogène avec captation totale du CO₂, recyclage du méthane non converti et purge intermédiaire.

Le réchauffement climatique de la planète, observé depuis l'ère industrielle selon la communauté scientifique internationale, pourrait modifier dramatiquement les climats et écosystèmes de nombreuses régions du globe. L'émission des gaz à effet de serre, et spécialement le dioxyde de carbone (CO₂) semble être responsable de ce réchauffement.

Les énergies fossiles (gaz naturel, pétrole, charbon) constituent une part importante des énergies facilement disponibles sur la planète. Or ces énergies fossiles, lorsqu'elles sont utilisées, produisent du CO₂ (généralement lors d'une étape de combustion) et participent ainsi au réchauffement climatique.

Une des solutions préconisées pour lutter contre le réchauffement climatique par l'émission de gaz à effet de serre est de capturer le CO₂ produit, puis de le stocker dans le sous-sol. Plusieurs voies sont explorées, dont le captage en précombustion qui consiste à convertir l'énergie fossile en hydrogène avec captage et stockage du CO₂ coproduit. L'hydrogène, vecteur énergétique, peut alors être brûlé librement sans émission de gaz à effet de serre.

Il existe actuellement plusieurs moyens de produire industriellement de l'hydrogène à partir des énergies fossiles. Le moyen le plus répandu est le vaporéformage du gaz naturel réalisé dans un four (en anglais SMR: Steam Methane Reforming) qui présente l'avantage d'utiliser une charge ayant un ratio hydrogène/carbone élevé compte tenu de la forte teneur en méthane dans sa composition. De façon simplifiée, la réaction catalytique de SMR peut s'écrire de la manière suivante:

*CH₄* + *H₂O* ↔ *CO* + *3H₂*

Cette réaction, très endothermique est équilibrée. Elle est favorisée par des températures élevées et se fait en général dans un four chauffé par un combustible tel que le gaz naturel. Classiquement l'unité de SMR est suivie d'une étape de conversion à la vapeur (WGS: Water Gas Shift) qui permet de maximiser la production d'hydrogène par la réaction suivante:

*CO* + *H₂O* ↔ *CO₂* + *H₂*

Lorsqu'il faut capter le CO₂ en vue de son stockage, il est possible d'utiliser ensuite une unité de lavage aux amines (MDEA en combinaison avec une autre amine par exemple) qui va extraire le CO₂ du flux riche en hydrogène, qui sera ensuite envoyé par exemple dans une turbine à gaz en vue de produire de l'électricité, tandis que le CO₂ sera comprimé et réexpédié en sous-sol.

Dans ce type de procédé l'objectif de captage du CO₂ n'est pas du tout atteint, car non seulement il reste encore du CO₂ à la sortie de la turbine du à la présence de méthane, de CO et de CO₂ encore présent dans l'hydrogène, mais il faut davantage de gaz naturel à l'entrée que s'il était envoyé directement dans la turbine. De plus le four dans lequel est réalisé le vaporéformage utilise du gaz naturel et donc émet beaucoup de CO₂. Le taux d'évitement du CO₂ est donc faible.

Une amélioration à cette technique consiste à ajouter une unité d'adsorption des impuretés modulée en pression (PSA). On obtient à ce moment là deux flux: un flux d'hydrogène pur à 99.99 % et un flux d'impuretés contenant au moins 20% d'hydrogène. Ce flux à basse pression est envoyé dans des brûleurs du four de vaporeformage, ce qui diminue le gaz naturel nécessaire pour le four, donc la production de CO₂. Cependant le taux d'évitement du CO₂ reste faible, puisque d'une part les impuretés vont sortir sous forme de CO₂ dans les fumées du four, et d'autre part il faut produire davantage d'hydrogène, donc utiliser davantage de gaz naturel pour la charge du vaporéformage.

Une autre amélioration décrite dans la demande de brevet FR 2 936 507 consiste à remplacer l'unité d'adsorption sur tamis moléculaire par une unité d'adsorption qui peut être par exemple sur charbon actif ou tout autre solide adsorbant. Cette unité d'adsorption est constituée d'au moins 2 adsorbeurs. Le cycle d'adsorption dans l'unité d'adsorption est constitué de plusieurs phases d'adsorption comprenant au moins les phases successives suivantes : adsorption des impuretés du flux de gaz riche en hydrogène à purifier sur un premier adsorbeur, régénération du premier adsorbeur avec recyclage de l'hydrogène, et adsorption des impuretés sur un deuxième adsorbeur et ainsi de suite s'il y'a plus de deux adsorbeurs.

L'inconvénient de cette solution est lié au recyclage d'une quantité importante d'hydrogène. En effet, selon la loi de Le Chatelier ce point ne favorise pas la réaction dans le sens direct du vaporeformage par la présence d'un produit de la réaction, et conduit donc à augmenter la taille de l'ensemble des équipements de la chaîne de fabrication du gaz de synthèse et de l'unité de séparation d'amine.

La présente invention a donc pour objet de pallier un ou plusieurs des inconvénients de l'art antérieur en proposant un procédé de production d'hydrogène permettant de capter les impuretés présentes en fin de production, et notamment le méthane, et de les recycler vers le vaporéformage sans perte d'énergie.

Pour cela la présente invention propose un procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone présent dans le flux obtenu à l'étape de conversion à la vapeur permettant de séparer le dioxyde de carbone du flux d'hydrogène,
- une étape de captage et de recyclage, vers le vaporéformage d'impuretés présentes dans le flux d'hydrogène, comprenant une phase de décompression.

L'étape de captage et recyclage des impuretés est réalisée dans une unité d'adsorption comprenant au moins deux adsorbeurs et comprend au moins les phases successives suivantes :
- adsorption des impuretés sur le premier adsorbeur,
- décompression et régénération du premier adsorbeur,
- adsorption des impuretés sur le deuxième adsorbeur.

La phase de décompression est réalisée à une pression comprise entre 0,2 MPa et 1,4 MPa.

La phase de décompression est réalisée à une température comprise entre 20°C et 100°C.

La phase de décompression est réalisée à une vitesse comprise entre 0,05 MPa par minute et 2 MPa par minute.

La phase de décompression produit un flux d'hydrogène qui est brulé dans l'unité de vaporeformage.

Selon un mode de réalisation de l'invention, la phase de décompression et régénération de l'adsorbeur est réalisée de la façon suivante:
- isolement du premier adsorbeur et mise en ligne du deuxième adsorbeur,
- décompression du premier adsorbeur, recompression et balayage du premier adsorbeur, avec un flux de charge hydrocarbonée destiné à servir de charge à l'unité de vaporéformage, et chauffé par échange avec de la vapeur d'eau destinée également à l'unité de vaporéformage, jusqu'à une température supérieure d'au moins 20°C à la température de condensation de la vapeur d'eau,
- régénération de l'adsorbeur réchauffé et désorption des impuretés par circulation de vapeur d'eau surchauffée d'au moins 20°C destinée à l'unité de vaporéformage,
- élimination de la vapeur d'eau présente dans l'adsorbeur régénéré par un balayage de l'adsorbeur avec un flux d'hydrogène pur et chaud,
- balayage de l'adsorbeur débarrassé de la vapeur d'eau par un flux d'hydrogène pur et froid.

Selon un mode de réalisation de l'invention, la phase de décompression produit un flux d'hydrogène envoyé en mélange avec une partie d'un flux d'hydrogène chaud et saturé en vapeur d'eau, obtenu après balayage de l'adsorbeur régénéré, qui est brulé dans l'unité de vaporeformage.

Selon un mode de réalisation de l'invention, à l'issu de l'élimination de la vapeur d'eau, une partie du flux d'hydrogène chaud et saturé en vapeur d'eau obtenu est envoyé qui est brulé dans l'unité de réformage, et l'autre partie du flux est envoyé en mélange avec de la vapeur d'eau de dilution vers une turbine à gaz pour produire de l'électricité.

Selon un autre mode de réalisation de l'invention, à l'issu de l'élimination de la vapeur d'eau, une partie du flux d'hydrogène obtenu après le balayage de l'adsorbeur régénéré est envoyé vers une unité extérieure, tandis que le reste de l'hydrogène est utilisé pour le balayage chaud, puis envoyé vers les brûleurs de l'unité de réformage.

Selon un mode de réalisation de l'invention, à l'issu du balayage avec l'hydrogène froid, le flux d'hydrogène réchauffé obtenu après la phase de refroidissement de l'adsorbeur est à nouveau réchauffé par échange avec de la vapeur d'eau et utilisé dans la phase d'élimination de la vapeur d'eau présente dans l'adsorbeur.

Selon un mode de réalisation de l'invention, la charge hydrocarbonée est du gaz naturel.

Selon un mode de réalisation de l'invention, les impuretés adsorbées sont du méthane, du dioxyde de carbone et du monoxyde de carbone.

Selon un mode de réalisation de l'invention, l'étape de production du gaz de synthèse est réalisée à une pression comprise entre 2,5 MPa et 3,5 MPa.

Selon un mode de réalisation de l'invention, l'étape de captage du dioxyde de carbone est réalisée dans une unité d'amine utilisant de la méthyldiéthylamine et au moins une autre amine.

D'autres caractéristiques et avantages de l'invention seront mieux compris et apparaîtront plus clairement à la lecture de la description faite, ci-après, en se référant aux figures annexées et données à titre d'exemple:
- la figure 1 représente un schéma du procédé de production d'hydrogène selon l'art antérieur,
- la figure 2 représente un schéma du procédé de production d'hydrogène selon l'invention,
- la figure 3 représente en détail l'unité d'adsorption du schéma de production d'hydrogène selon l'invention,
- la figure 4 représente en détail une partie de l'unité d'adsorption du schéma de production d'hydrogène selon l'invention,
- la figure 5 représente une variante du schéma du procédé selon l'invention,
- la figure 6 représente un mode d'utilisation du schéma de production d'hydrogène selon l'invention.

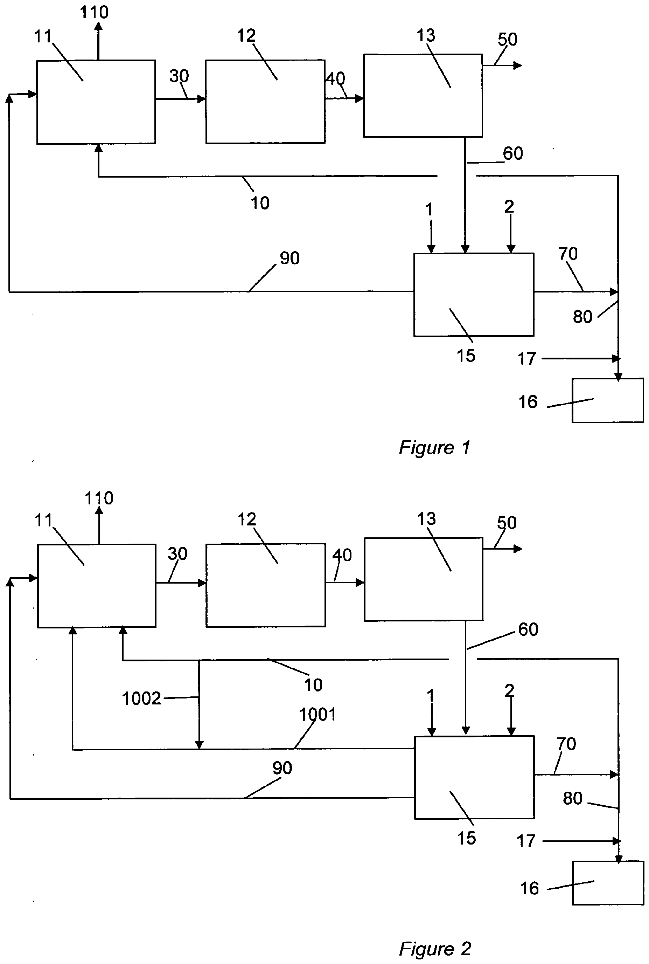

Lors du procédé de production d'hydrogène, illustré sur les figures 1 et 2, un flux de gaz naturel circulant dans un conduit (1) de charge arrivant dans l'unité d'adsorption (15) et un flux de vapeur d'eau circulant dans un conduit (2) de vapeur d'eau arrivant dans l'unité d'adsorption (15) sont envoyés indirectement comme charge dans une unité de vaporéformage (11). La chaleur nécessaire à la réaction est produite par un flux de combustible arrivant par un conduit (10) dans l'unité de vaporéformage (11), dans le four de vaporéformage. Le combustible peut être du gaz naturel. Cette réaction produit en sortie du four (110) un flux de fumées contenant un peu de gaz carbonique. Le flux de gaz de synthèse, circulant dans un conduit (30) de gaz de synthèse allant de l'unité de vaporéformage (11) à l'unité de conversion à la vapeur (12), obtenu par la réaction de vaporéformage contient principalement de l'hydrogène (H₂), du monoxyde de carbone (CO), du dioxyde de carbone (CO₂), ainsi que de la vapeur d'eau (H₂O) et un peu de méthane n'ayant pas réagi (CH₄), car la réaction est équilibrée et même à une température de 900°C, il reste environ 4% de méthane n'ayant pas réagi. Ce flux de gaz de synthèse est envoyé par le conduit (30) de gaz de synthèse à l'unité de conversion à la vapeur (12). Dans cette unité l'essentiel du monoxyde de carbone est converti en dioxyde de carbone à l'aide de la vapeur d'eau, libérant du même coup un peu plus d'hydrogène. Cette réaction aussi est équilibrée, et il reste finalement un peu de monoxyde de carbone (0.5% dans des conditions de conversion poussée). En sortie de l'unité de conversion (12), le flux de conversion, circulant dans un conduit (40) de flux de conversion reliant l'unité de conversion (12) et l'unité de captage de CO₂ (13), obtenu contient essentiellement de l'hydrogène et du dioxyde de carbone. Ce flux circulant dans le conduit (40) de flux de conversion contient également un peu de méthane et de monoxyde de carbone, le reste de vapeur d'eau ayant été condensé après les réacteurs de conversion à la vapeur.

Le flux de conversion est ensuite envoyé vers une unité de captage de CO₂ (13), qui peut être une unité d'amines, et par exemple une unité d'amines utilisant de la méthyldiéthylamine (MDEA) en combinaison avec au moins une autre amine est particulièrement adaptée. Il est possible d'utiliser d'autres unités de captage de CO₂ bien connues de l'homme du métier.

L'essentiel du CO₂ est séparé et envoyé par un conduit (50) de CO₂ vers une unité de compression et de séchage, pour être ensuite transporté vers un lieu de réinjection tel qu'un gisement épuisé ou une couche géologique adaptée.

Le gaz riche en hydrogène est évacué par un autre conduit (60) de gaz riche en hydrogène reliant l'unité de captage de CO₂ (13) et l'unité d'adsorption (15). Ce gaz comprend un peu de méthane, de monoxyde de carbone et un peu de dioxyde de carbone non capturé (environ 0.5%).

Dans le procédé selon l'invention ce gaz riche en hydrogène est dirigé vers l'unité d'adsorption sur charbon actif (15).

Dans l'unité d'adsorption (15) utilisée dans le procédé selon l'invention, qui fait appel par exemple à du charbon actif ou à tout autre solide adsorbant, la régénération se fait à haute pression par de la vapeur d'eau amenée par le conduit (2) de vapeur d'eau. Cette vapeur d'eau est ensuite utilisée comme charge de l'unité de vaporéformage amenée par le conduit (90) de charge du vaporéformage reliant l'unité d'adsorption (15) et l'unité de vaporeformage (11). Les impuretés (CH₄, CO, CO₂) sont de cette façon recyclées au réacteur de vaporéformage. Pour minimiser le CO₂ émis par le four de vaporéformage, on utilise une partie de l'hydrogène produit sortant par le conduit (70) d'hydrogène dans l'unité de vaporéformage (11). Une partie de l'hydrogène issu du conduit (70) est donc envoyée vers les brûleurs de l'unité de vaporéformage (pour y être brulé) par le conduit (10) de sorte que les fumées sortant par le conduit (110) ne comportent pas de CO₂. Le reste de l'hydrogène est envoyé par le conduit (80) vers la turbine à gaz (16) en mélange avec de la vapeur d'eau de dilution arrivant par le conduit (17) de vapeur d'eau de dilution. Dans cette configuration, le taux d'évitement de CO₂ peut être proche de 100%.

Les bruleurs de l'unité de vaporéformage (11) sont également alimentés par de l'hydrogène pur à haute pression provenant de l'unité d'adsorption (15). Cet hydrogène est le résultat d'une phase de décompression ou dépressurisation réalisée dans l'unité d'adsorption (15) et décrite ci-après. Cet apport d'hydrogène se fait par l'intermédiaire du conduit (1001) de dépressurisation qui part de l'unité d'adsorption (15) et arrive dans l'unité de vaporeformage (11). Si nécessaire le débit de la ligne (1001) peut être complété avec de l'hydrogène provenant du conduit (10) par l'intermédiaire du conduit (1002) qui relie le conduit (10) de chaleur au conduit (1001) de dépressurisation.

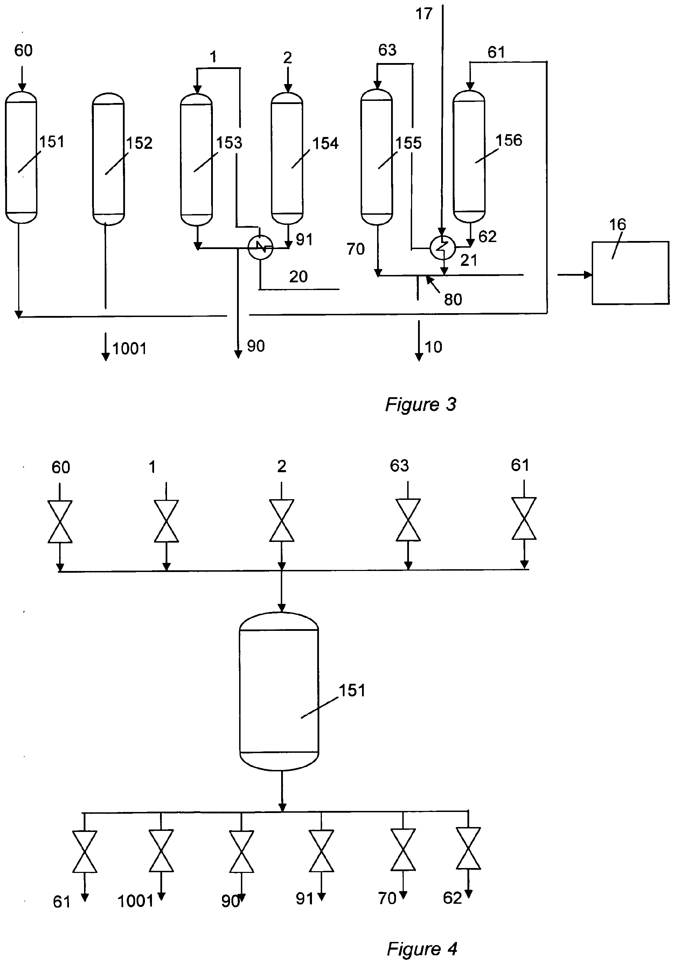

L'unité d'adsorption (15) utilisée dans la présente invention est constituée de plusieurs adsorbeurs, également appelés capacités (151 à 156). Le mode de fonctionnement est illustré sur la figure 3 dans une configuration à 6 adsorbeurs, configuration non
limitative. Un nombre différent de capacités est évidemment possible sans sortir du cadre de la présente invention et par exemple 1 à 18, et de préférence 5 à 12, mais nous nous sommes limités à 6 pour pouvoir expliquer l'invention plus simplement. Cette unité d'adsorption (15) est alimentée en méthane de charge, nécessaire pour des phases ultérieures de purge et de pressurisation, par le conduit (1) de charge.

Selon l'invention, l'étape de désorption des impuretés présentes dans l'hydrogène et adsorbées sur le solide est réalisée par de la vapeur d'eau surchauffée. Le solide adsorbant doit être capable de résister à des températures élevées, typiquement comprises entre la température ambiante et 350 °C, en présence de vapeur d'eau surchauffée. Selon l'invention, l'adsorbant sera choisi par les adsorbants de type charbons actifs ou tamis moléculaires carbone.

Parmi le groupe des charbons actifs, on choisira préférentiellement les charbons actifs ayant été préparés par activation physique à la vapeur, plutôt que par activation chimique par exemple à l'acide. Les conditions d'activation sont en effet plus sévères que celles rencontrées dans les conditions de l'invention, notamment pour la température qui est généralement comprise entre 600 et 900 °C.

On choisira préférentiellement un charbon actif contenant essentiellement des micropores, dont le diamètre est typiquement inférieur à 2 nm, et des macropores, dont le diamètre est supérieur à 50 nm, et une quantité la plus faible possible de mésopores (diamètres compris entre 2 et 50 nm). Ces diamètres peuvent être calculés à partir des isothermes d'adsorption d'azote à 77 K selon par exemple la méthode B.J.H. (domaine des mésopores), bien connue de l'homme de l'art, et des courbes d'intrusion de mercure selon la loi de Washburn (domaine des macropores), également bien connue de l'homme de l'art.

La raison d'un tel choix s'explique par le fait que la vapeur d'eau présente dans le lit d'adsorbant peut conduire au phénomène de condensation capillaire dans les mésopores du charbon actif, notamment si la température de la vapeur surchauffée baisse sensiblement jusqu'à atteindre la température de rosée à la pression considérée. La pression relative de la vapeur d'eau pouvant donner lieu à ce phénomène de condensation capillaire dans les mésopores peut être calculée selon l'équation de Kelvin, en utilisant les paramètres relatifs à l'eau. On pourra se référer utilement à ce sujet par exemple aux ouvrages de S.J. Gregg et K.S.W. Sing (Adsorption, Surface Area and Porosity) et de J. Rouquérol et al. (Adsorption by Powders and Porous Solids). Les charbons actifs utilisés dans le cadre de l'invention seront mis en forme, sous forme par exemple de granulés, dont le diamètre est par exemple compris entre 0,5 et 5 mm, d'extrudés, dont la longueur est d'environ 0,5 à quelques mm, ou des concassés de quelques millimètres de dimensions caractéristiques.

Le volume microporeux des charbons actifs sera par exemple compris entre 0,05 et 0,80 cm3/g, déterminé par exemple par adsorption d'azote à 77 K par la méthode du t-plot, ou selon l'équation de Dubinin et ses variantes.

Le volume mésoporeux sera préférentiellement compris entre 0,05 et 0,30 cm3/g, déterminé par adsorption d'azote à 77 K à une pression relative de P/P0 voisine de 0,98-0,99 diminué du volume microporeux.

Le volume macroporeux sera préférentiellement compris entre 0,10 et 0,50 cm3/g, déterminé par intrusion de mercure.

Comme exemple de charbons actifs répondant à ce critère, on peut par exemple citer le charbon actif AC35/3, de Ceca/Arkema, les charbons actifs PicaCarb E460-E et Picactif TA60 ou TA90, de Pica Carbon.

Le cycle d'adsorption dans l'unité d'adsorption (15) est constitué de plusieurs phases. Les six capacités (151 à 156), illustrées sur la figure 3, sont remplies d'adsorbant. Le flux de gaz riche en hydrogène à purifier arrivant par le conduit (60) est envoyé dans la première capacité (151) à une température comprise entre 20 et 100°C, de préférence entre 40°C et 80°C, et de manière très préférée entre 30°C et 70°C. Le méthane, le CO et le CO₂ contenu dans ce flux sont capturés sur l'adsorbant, et l'hydrogène purifié sort par le conduit (61). L'hydrogène, circulant dans le conduit (61) reliant la première capacité (151) à la sixième capacité (156) est ensuite envoyé dans la sixième capacité (156) de manière à la refroidir jusqu'à la température d'opération qui se situe entre 20°C et 100°C. L'hydrogène réchauffé sort de la sixième capacité par le conduit (62) reliant la sixième capacités (156) et un échangeur de chaleur (21), et est envoyé vers un échangeur de chaleur (21) pour être encore réchauffé par échange avec de la vapeur d'eau de dilution arrivant par le conduit (17) de vapeur d'eau de dilution. L'hydrogène chaud sort de l'échangeur de chaleur (21) par le conduit (63) d'hydrogène chaud reliant l'échangeur de chaleur (21) à une cinquième capacité (155) à une température au moins supérieure de 20°C à la température de condensation de la vapeur d'eau à la pression opératoire. L'hydrogène chaud qui est amené dans la cinquième capacité (155) par le conduit (63) permet d'évacuer la vapeur d'eau restant dans la capacité après l'étape de régénération. Cette vapeur d'eau est envoyée en mélange avec l'hydrogène en partie vers les brûleurs du four de vaporéformage par le conduit (10) et en partie vers la turbine à gaz (16) par le conduit (80). Selon une variante de l'invention, une partie de l'hydrogène circulant dans le conduit (62) peut être prélevée à la sortie de la sixième capacité (156), refroidie par un échangeur de chaleur à l'aide d'eau de refroidissement ou d'air, et comprimé par un compresseur. On a ainsi un flux d'hydrogène pur envoyé par exemple vers une unité extérieure à des utilisateurs extérieurs. Le reste de l'hydrogène du conduit (62) est chauffé par l'échangeur (21) avant de balayer la cinquième capacité (155), ressort par le conduit (70) reliant la cinquième capacité (155) à la turbine à gaz (16), est mélangé ensuite avec la vapeur d'eau de dilution (17), refroidie par l'échangeur (21), et est envoyé comme combustible vers le four de vaporéformage (11) par le conduit (10).

La quatrième capacité (154) est balayée par de la vapeur d'eau amenée par le conduit (2) de vapeur d'eau. La vapeur d'eau chargée de méthane et de CO₂ est évacuée de la quatrième capacité (154) par le conduit (91) reliant la troisième capacité (153) à un échangeur de chaleur (20), est légèrement refroidie dans ce deuxième échangeur de chaleur (20) par échange avec le gaz naturel arrivant par le conduit (1), puis mélangée avec le gaz naturel venant de la troisième capacité (153), pour être ensuite envoyée par le conduit (90) de charge du vaporéformage vers l'unité de vaporéformage (11).

La troisième capacité (153) est d'abord ramenée à la pression du gaz naturel qui est d'environ 3,5 MPa, puis réchauffée progressivement par balayage par du gaz naturel chaud (250°C à 350°C) arrivant par le conduit (1) après préchauffe par échange avec de la vapeur d'eau amenée par le conduit (91).

L'invention consiste à dépressuriser la deuxième capacité (152), pendant les étapes précédentes, à l'aide du conduit (1001) de dépressurisation. L'hydrogène circulant dans le conduit (1001) est ensuite envoyé vers les brûleurs à moyenne et/ou basse pression des fours servant à apporter l'énergie nécessaire à l'unité de vaporeformage (11). En effectuant cette séquence à une pression intermédiaire entre la pression d'adsorption et la pression des brûleurs, il est possible d'évacuer principalement l'hydrogène présent dans le lit d'adsorbant. Lors de cette séquence une partie des autres constituants tels que le méthane, l'éthane, une petite quantité de CO et de vapeur d'eau sont également extraits et représentent moins de 10% molaire dans ce flux. Les hydrocarbures légers proviennent à la fois du gaz emprisonné entre les grains d'adsorbant dans chaque capacité et de la désorption partielle des gaz comme le méthane en raison d'une modification de la pression partielle.

L'hydrogène circulant dans le conduit (1001) peut également être envoyé vers les brûleurs à moyenne et/ou basse pression des fours servant à apporter l'énergie nécessaire à l'unité de vaporeformage (11) en mélange avec une partie du flux d'hydrogène chaud et saturé en vapeur d'eau obtenu après balayage de l'adsorbeur régénéré et circulant dans le conduit (70).

La figure 4 représente une des capacités ou adsorbeurs, par exemple la première (151) contenant la substance adsorbante qui peut être le charbon actif. Les conduits (60, 1, 2, 63 et 61), amenant respectivement l'hydrogène à purifier, le gaz naturel, la vapeur d'eau, l'hydrogène pur chaud et l'hydrogène pur froid, sont connectés à la capacité avec des vannes permettant d'isoler chacun des circuits. Les conduits (61, 1001, 90, 91, 70, et 62), évacuant respectivement l'hydrogène pur froid, l'hydrogène issu de l'étape de dépressurisation, le méthane vers l'unité de vaporéformage, la vapeur d'eau vers l'unité de vaporéformage, l'hydrogène pur saturé en vapeur d'eau et l'hydrogène pur, sont également connectés à la capacité avec des vannes d'isolement.

Sur cette figure dans un but de simplification, on a représenté l'arrivée de toutes les entrées en haut de la capacité, et toutes les sorties en bas, mais ceci est seulement une des possibilités et toutes les autres configurations sont possibles sans sortir de la présente invention.

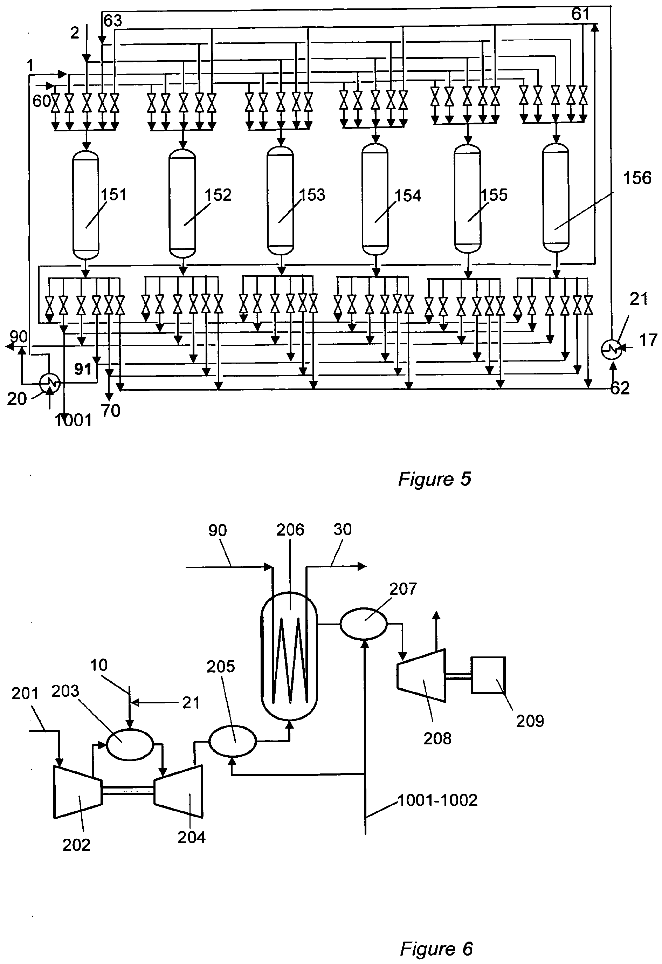

La figure 5 représente l'arrangement de six capacités ou adsorbeurs en parallèle (151, 152, 153, 154, 155 et 156) permettant un fonctionnement en continu de l'installation. Dans ce cas également un nombre différent de capacités est évidemment possible sans sortir du cadre de la présente invention, mais nous nous sommes limités à 6 pour pouvoir expliquer l'invention en détail plus simplement.

Lors de la première phase d'opération du cycle d'adsorption la première capacité (151) reçoit de l'hydrogène froid et impur par le conduit (60), retient les diverses impuretés sur l'adsorbant, et l'hydrogène pur ressort par le conduit (61). La deuxième capacité (152) est dépressurisée. La troisième capacité (153) vient d'être retirée du circuit et entre en régénération. Dans un premier temps, on a une pressurisation par le méthane chaud arrivant par le conduit (1), puis l'adsorbant est chauffé par le méthane jusqu'à une température comprise entre 250°C et 350°C où la vapeur d'eau utilisée ensuite pour la régénération ne risque pas de condenser (tension de vapeur de l'eau à 2,5 MPa 225°C environ, à 3,5 MPa, environ 245°C). Le méthane en sortie d'adsorbant est envoyé par le conduit (90) vers l'unité de vaporéformage.

Pendant cette première phase la quatrième capacité (154) est en régénération : la vapeur d'eau surchauffée est alimentée par le conduit (2), elle permet de désorber le méthane, le CO et le CO₂ présent sur l'adsorbant. Le mélange vapeur d'eau, méthane et impuretés va être renvoyé à l'unité de vaporéformage par le conduit (91), en mélange avec le méthane venant de la troisième capacité (153).

La cinquième capacité (155) est en purge de vapeur d'eau grâce à la circulation d'hydrogène pur et chaud amené par le conduit (63), et renvoyé par le conduit (70). La sixième capacité (156) est en refroidissement par l'hydrogène pur et froid amené par le conduit (61), l'hydrogène pur étant renvoyé par le conduit (62).

Lors de la phase suivante la première capacité (151) est dépressurisée. La deuxième capacité (152) passe en pressurisation et en chauffe, la troisième capacité (153) est en régénération, la quatrième capacité (154) est en purge, la cinquième capacité (155) est en refroidissement et la sixième capacité (156) est en ligne sur l'hydrogène à purifier.

Lors de la troisième phase d'opération, la première capacité (151) passe en pressurisation et en chauffe, la deuxième capacité (152) en régénération, la troisième capacité (153) est en purge, la quatrième capacité (154) est en refroidissement, la cinquième capacité (155) est en purification d'hydrogène, la sixième capacité (156) est dépressurisé..

Lors de la quatrième phase d'opération, la première capacité (151) est en régénération la deuxième capacité (152) passe en purge, la troisième capacité (153) est en refroidissement, la quatrième capacité (154) est en purification d'hydrogène, la cinquième capacité (155) est en dépressurisation et la sixième capacité (156) est en pressurisation et chauffage par le méthane.

Lors de la cinquième phase d'opération, la première capacité (151) est en purge, la deuxième capacité (152) est en refroidissement, la troisième capacité (153) est en purification d'hydrogène, la quatrième capacité (154) est en dépressurisation, la cinquième capacité (155) est pressurisation et chauffage par le méthane, et la sixième capacité (156) passe en régénération par circulation de vapeur d'eau.

Lors de la sixième phase, la première capacité (151) est en refroidissement, la deuxième capacité (152) est en purification d'hydrogène, la troisième capacité (153) est en dépressurisation, la quatrième capacité (154) est en pressurisation et chauffage par le méthane, et la cinquième capacité (155) passe en régénération par circulation de vapeur d'eau et la sixième capacité (156) est en purge.

Le cycle complet est achevé, et la phase suivante est semblable à la première.

Les conditions opératoires ainsi que la composition des différents flux au cours du procédé sont récapitulées dans le tableau A ci-après, dans le cas par exemple d'un vaporéformage fonctionnant à 3,3 MPa.

**Tableau A**

| N° du flux | Composition | Pression (MPa) | Température (°C) |
|---|---|---|---|
| 1 | Gaz naturel (CH₄ principalement) | 3,5 | 300 (après préchauffe) |
| 2 | H₂O | 3,5 | 350 |
| 60 | H₂, CH₄, H₂O, εCO, εCO₂ | 2,6 | 62 |
| 1001 | H₂, CH₄, H₂O, εCO, εCO₂ | 0.7 | 62 |
| 61 | H₂ | 2,5 | 62 |
| 62 | H₂ | 2,5 | 62 - 300 |
| 63 | H₂ | 2,5 | 300 |
| 70 | H₂ + H₂O | 2,5 | 300 |
| 90 | CH₄, H₂O, εCO, εCO₂ | 3,4 | 320 |

Le procédé, objet de l'invention, permet donc de capter les impuretés présentes (CH₄, CO, CO₂) dans le flux riche en hydrogène (sortant du lavage aux amines) et de les renvoyer, sous pression avec la charge du vaporéformage. Il peut se résumer de la façon décrite ci-après.

Ce procédé qui est cyclique utilise plusieurs capacités et comprend au moins les étapes successives suivantes:
- Etape 1: adsorption du méthane, CO et CO₂ dans le flux riche en hydrogène sur un adsorbant d'une capacité. Cette étape se déroule à basse température entre 20 et 100°C, de préférence entre 40°C et 80°C, et de manière très préférée entre 30°C et 70°C, la pression est comprise entre 1 et 10 MPa, préférentiellement entre 2 et 8 MPa, et très préférentiellement entre 1,5 et 4 MPA. La vitesse du gaz est comprise entre 0,5 et 20 m/min, et préférentiellement entre 1 et 10 m/min. La durée de la phase d'adsorption est comprise entre 1 et 60 minutes, préférentiellement entre 1 et 30 minutes, et préférentiellement entre 1 et 15 minutes. L'hydrogène sort pur de cette étape. L'adsorbant peut par exemple être du charbon actif. Cette étape est de préférence réalisée en fonctionnant de bas en haut (up flow selon la terminologie anglo-saxonne) afin de limiter le risque de mouillage des adsorbants de finitions situés en partie supérieure. Ceci peut permettre l'évacuation d'eau en cas de nécessité par gravitation en fond d'adsorbeur.
- Etape 2:dépressurisation de la capacité lorsque l'adsorbant est saturé. Cette phase de décompression ou dépressurisation est réalisée jusqu'à une pression basse comprise entre 0,2 MPa et 1,4 MPa et de préférence entre 0,4 MPa et 1. MPa. La dépressurisation est réalisée à une vitesse comprise entre 0,05 et 2 MPa par minute , de préférence entre 0,1 et 1 MPa par minute et de manière très préférée entre 0,2 et 0,5 MPa par minute. La capacité est ensuite isolée du circuit, et une autre capacité est mise en ligne. La température de cette étape est comprise entre 20 et 100°C et préférentiellement entre 20 et 80°C. Cette étape produit un flux d'hydrogène qui est brulé dans l'unité de vaporeformage. Le flux d'hydrogène peut également être envoyé en mélange avec une partie d'un flux d'hydrogène chaud et saturé en vapeur d'eau, obtenu après un balayage de l'adsorbeur régénéré, qui est brulé dans l'unité de vaporeformage.
- Etape 3: la capacité isolée dans l'étape précédente est ensuite remontée en pression et en température avec la charge du procédé (le gaz naturel) disponible en pression en limite d'unité et généralement préchauffée aux alentour de 150°C dans l'unité de vaporéformage. Le gaz naturel est chauffé aux alentours de 300°C par échange avec la vapeur d'eau avant d'être envoyé sur le lit d'adsorbant. La circulation du gaz naturel chaud dans la capacité permet de réchauffer le lit d'adsorbant ainsi que les parois jusqu'à une température supérieure d'au moins 20°C à la température de condensation de la vapeur d'eau à la pression d'opération (255°C à 3,5 MPa) ce qui évitera tout risque de condensation lors de l'étape suivante. La variation de pression est celle existant entre la pression de l'hydrogène à purifier et la pression de la vapeur d'eau surchauffée disponible. La recompression est réalisée à une vitesse comprise entre 0,05 et 4 MPa/min, préférentiellement entre 0,1 et 1 MPa/min, et préférentiellement entre 0,2 et 0,5 MPa/min.
- Etape 4: l'adsorbant de la capacité réchauffée est ensuite régénéré par circulation de la vapeur utilisée à l'entrée du vaporéformage. La vapeur permet la désorption des impuretés de l'adsorbant (CH₄ principalement) et les renvoie dans le réacteur de vaporéformage. La vapeur d'eau en sortie de la capacité est envoyée dans un échangeur pour réchauffer le gaz naturel destiné au préchauffage. La pression est comprise entre 1 et 10 MPa, préférentiellement entre 2 et 8 MPa, et très préférentiellement entre 1,5 et 4 MPA, et la température est comprise entre 20 et 400 °C, et préférentiellement entre 50 et 300 °C.
   La vitesse du gaz est comprise entre 0,5 et 20 m/min, et préférentiellement entre 1 et 10 m/min. La durée de la phase de désorption est comprise entre 1 et 180 minutes, préférentiellement entre 1 et 30 minutes, et préférentiellement entre 1 et 15 minutes. La durée de la phase de désorption peut être choisie de telle manière à ce que la température de la vapeur en sortie d'adsorbeur soit supérieure de 5 °C à la température de rosée de la vapeur d'eau à la pression considérée. En procédant ainsi, on limite fortement le risque de condensation d'eau dans la mésoporosité de l'adsorbant.
- Etape 5: la capacité est ensuite isolée, puis balayée par de l'hydrogène pur et chaud pour enlever la vapeur encore présente dans la capacité. L'hydrogène chaud et saturé en vapeur d'eau est ensuite envoyé, en partie vers les brûleurs du four de vaporéformage, et qui est brulé par l'unité de vaporéformage, et le reste en mélange avec de la vapeur d'eau de dilution vers la turbine à gaz pour produire de l'électricité. En effet les turbines actuelles ne peuvent pas fonctionner sur hydrogène pur, mais pourraient d'après l'homme de l'art fonctionner moyennant quelques adaptations avec un mélange à 50% d'hydrogène et de vapeur d'eau. La pression est comprise entre 1 et 10 MPa, et préférentiellement entre 2 et 8 MPa, et la température est comprise entre 20 et 400 °C, et préférentiellement entre 50 et 300 °C. La vitesse du gaz est comprise entre 0,5 et 20 m/min, et préférentiellement entre 1 et 10 m/min. La durée de cette phase de purge est comprise entre 1 et 180 minutes, préférentiellement entre 1 et 30 minutes, et préférentiellement entre 1 et 15 minutes. La durée de cette phase de purge peut être choisie de manière à balayer l'adsorbeur avec un volume de gaz compris par exemple entre 1 et 100 volumes d'adsorbeur, préférentiellement entre 2 et 50 volumes d'adsorbeur.
- Etape 6: la capacité est refroidie par balayage d'hydrogène pur et froid. L'hydrogène réchauffé en sortie de capacité est encore réchauffé par échange avec la vapeur de dilution avant d'être renvoyé vers l'étape 5. La pression est comprise entre 1 et 10 MPa, et préférentiellement entre 2 et 8 MPa, et la température est comprise entre 20 et 200 °C, et préférentiellement entre 50 et 100 °C. La vitesse du gaz est comprise entre 0,5 et 20 m/min, et préférentiellement entre 1 et 10 m/min. La durée de la phase de refroidissement de l'adsorbant est comprise entre 1 et 180 minutes, préférentiellement entre 1 et 30 minutes, et préférentiellement entre 1 et 15 minutes. Le gaz utilisé dans cette étape peut être par exemple tout ou une partie de l'hydrogène purifié produit lors de l'étape 1.

L'ajout d'une phase de décompression ou dépressurisation à une pression intermédiaire dans le cycle de l'unité d'adsorption décrit précédemment permet :
- de minimiser le débit d'hydrogène recyclé car l'hydrogène recueilli lors de la phase de décompression est dirigé vers des brûleurs à moyenne et ou basse pression. Cette configuration pouvant inclure une utilisation correspondant à un reformage à la vapeur classique fonctionnant avec une unité de capture du CO₂ en précombustion. Dans ce cas le flux d'hydrogène peut alimenter les brûleurs des fours servant à apporter l'énergie nécessaire à la réaction. Ce flux peut être complété de préférence par de l'hydrogène produit pour limiter les émissions de dioxyde de carbone. De plus la réduction du débit de recyclage permet de diminuer la taille des équipements tel que l'unité de vaporeformage, l'unité de conversion à la vapeur et l'unité d'amine et améliore la conversion en hydrogène.
- de maintenir un débit de recycle de méthane satisfaisant permettant de favoriser la réaction d'équilibre de vaporeformage dans le sens direct.
- d'augmenter le rendement global net de l'unité
- d'obtenir un taux d'évitement du CO₂ supérieur à 90%
- de réduire de 0.8% le débit de gaz naturel de charge en conservant les mêmes tailles de turbine.

La figure 6 détaille un exemple de réalisation de l'unité de vaporeformage (11) en utilisant le procède HyGenSys™ (marque déposée) qui signifie "Hydrogen Generation System", c'est-à-dire système de production d'hydrogène. Il s'agit ici d'une version du procédé de co-production d'hydrogène et d'électricité à partir de gaz naturel adapté au captage du CO₂ en précombustion.

Le principe de ce procédé a été décrit dans le brevet FR 2 852 358. HyGenSys™ est un procédé qui associe une turbine à gaz et un réacteur-échangeur compact de reformage à la vapeur du gaz naturel. La spécificité du procédé est liée à la manière donc la chaleur est apportée à la réaction très endothermique de reformage du gaz naturel.

Le procédé se caractérise par :
- l'utilisation de fumées chaudes et en pression issues d'un turbo-compresseur sans alternateur pour le chauffage d'un réacteur-échangeur ;
- une technologie compacte avec une intégration thermique poussée pour le réacteur-échangeur HyGenSys™;
- une turbine de détente reliée à un alternateur (expandeur de récupération) en aval du réacteur HyGenSys™ produisant de l'électricité.

Le mélange (gaz naturel désulfuré + vapeur) préchauffé est introduit via le conduit (90) dans le réacteur-échangeur (206) permettant de réaliser la réaction de reformage à la vapeur conduisant à la production d'un gaz de synthèse par le conduit (30). La chaleur est apportée par des gaz chauds issus d'un dispositif de cogénération par turbine à gaz. Le procédé comprend une compression de l'air introduit via le conduit (201) dans une section de compression (202), une première étape de combustion dans une chambre de combustion (203) sous pression (par exemple 1,8 MPa) entre l'air comprimé et un mélange riche en hydrogène. Le mélange riche en hydrogène provenant du conduit (10) est dilué à 50 % volume par exemple avec de la vapeur d'eau (21). Aprés l'étape de combustion avec l'air, le mélange est ensuite détendu dans une section de détente (204) constituée d'une turbine reliée au même arbre que le compresseur. La détente de la turbine fournit la puissance nécessaire au compresseur, la pression de sortie de la turbine est de l'ordre de 0.5 MPa, Il est réalisé une combustion dans l'unité (205) du gaz en sortie de l'unité (204) et mélangé avec le gaz riche en hydrogène issu soit du conduit 10 dans le cas de la figure 3 soit du conduit 1001 avec une addition éventuel de gaz riche en hydrogène du conduit 1002 dans le cas de la figure 6. Le débit de mélange riche en hydrogène est ajusté de manière à obtenir une température de l'ordre de 1260°C en sortie de cette chambre de combustion. Les fumées chaudes obtenues apportent la chaleur nécessaire au réacteur-échangeur (206). Les fumées refroidies en sortie la section (206) sont à nouveau réchauffées dans la chambre de combustion (207) par l'ajout d'un flux d'hydrogène riche provenant du conduit (1001) avec une addition éventuelle de gaz riche en hydrogène du conduit (1002) venant du conduit (10) (figure 2). L'hydrogène circulant dans le conduit (1001) est de l'hydrogène à basse ou moyenne pression, il peut être intéressant de disposer d'un complément d'hydrogène transmise par le conduit (10) via le conduit (1002) pour alimenter certaines rampes de brûleurs. De plus dans le cas de l'utilisation du procédé HyGenSys™, il est possible d'utiliser soit le conduit (1001) soit les conduits (1001) et (1002) pour alimenter les chambres de combustion (205, 207) (figure 6).

Les fumées sont alors envoyées dans une turbine de détente (208) de manière à récupérer l'énergie de détente sous forme d'électricité via un alternateur (209).

Le procédé HyGenSys™ permet également de faciliter le captage du CO₂ en vue de sa séquestration.

Lorsque cette option est retenue, une fraction de l'hydrogène produit est utilisée en mélange avec de la vapeur d'eau, comme fuel pour alimenter la turbine et les chambres de combustion amont et aval du réacteur-échangeur.

Les exemples qui suivent illustrent une application particulière de l'invention

### Exemples:

Les exemples 1 et 2 sont basés sur une utilisation de la technologie HyGenSys™..

Les exemples 1 et 2 produisent de l'ordre de 490 MW électrique à partir d'un cycle combiné. Le dispositif utilisé dans ces semples comporte :
- 4 réacteurs échangeurs
- 4 générateurs de gaz chauds basé sur une turbine type SGT-700 modifiée pour fonctionner avec un mélange riche en hydrogène. Dans ce cas de fonctionnement, seul l'arbre situé entre le compresseur d'air et la turbine de détente à une pression intermédiaire est utilisé. Le travail de la détente permet de fournir l'énergie nécessaire au fonctionnement du compresseur.
- 4 turbines de détente de type Dresser-Rand (E-248)
- 1 turbine principale type SGT5-4000

Les exemples 1 et 2 sont effectués avec le mêmes turbines ce qui conduit à de légères variations du débit de gaz naturel introduit et de puissances électrique récupérée.

### Exemple 1: selon l'art antérieur

On veut produire 485 MW électrique à l'aide d'un cycle combiné (turbine à gaz + récupération de chaleur sur les fumées en sortie de la turbine avec production de vapeur et turbines à vapeur) en utilisant la technologie HyGenSys™.

On utilise du gaz naturel à 7 MPa et 10°C de composition molaire suivante :
- CH₄ : 91%
- C₂H₆ : 6%
- C₃H₈ : 1%
- CO₂ : 2%

Après les étapes de reformage à la vapeur, conversion à la vapeur et d'absorption à la MDEA activée, le gaz produit est à 2,65 MPa, 57°C et sa composition molaire est la suivante :
- H₂ : 92.8%
- CH₄ : 5.62%
- CO : 0.95 %
- CO₂ : 0.01%
- H₂O : 0.62%

Il est surchauffé de 5°C pour ne plus être à saturation et éviter toute condensation d'eau sur l'adsorbant.

Le débit total d'hydrogène pur alimentant les turbines est 469 190 Nm³/h sans étape de purge intermédiaire.

### Le débit d'hydrogène pur recyclé est 22 430 Nm3/h

La chaleur nécessaire à la réaction de reformage à la vapeur est fournie par les fumées de combustion dans les réacteurs échangeurs.

Le débit de gaz naturel est de 114 800 Nm³/h.

Le débit de vapeur pour le reformage à la vapeur est de 422 730 Nm³/h.

Le débit de vapeur de dilution est de 308 100 Nm³/h.

L'unité d'adsorption est constituée de 4 unités d'adsorption en parallèle comportant chacune 5 capacités.

En terme de performance globale le rendement énergétique globale est de 40.6 %.

Le taux de capture de CO₂ est alors de 98.1%.

### Exemple 2 selon l'invention:

On veut produire 490 MW électrique à l'aide d'un cycle combiné (turbine à gaz + récupération de chaleur sur les fumées en sortie de la turbine avec production de vapeur et turbines à vapeur) en utilisant la technologie HyGenSys™.

On utilise du gaz naturel à 7 MPa et 10°C de composition molaire suivante :
- CH₄ : 91%
- C₂H₆ : 6%
- C₃H₈ : 1%
- CO₂ : 2%

En procédant selon la présente invention, après reformage à la vapeur, la conversion à la vapeur et absorption à la MDEA activée, le gaz produit est à 2,65 MPa, 57°C et la composition molaire selon l'invention est la suivante :
- H₂ : 94.3%
- CH₄ : 3.92 %
- CO : 1.14%
- CO₂ : 0.01%
- H₂O : 0.63%

Il est surchauffé de 5°C pour ne plus être à saturation et éviter toute condensation d'eau sur l'adsorbant.

Le débit total d'hydrogène pur alimentant les turbines est 431 690 Nm³/h soit une réduction de 8% (par rapport à l'exemple comparatif) dont 26 760 Nm³/h provenant de l'étape de purge intermédiaire décrite dans la présente invention.

Le débit d'hydrogène pur recyclé est 9610 Nm3/h soit une réduction de 57% (par rapport à l'exemple comparatif).

La chaleur nécessaire à la réaction de reformage à la vapeur est fournie par les fumées de combustion dans les réacteurs échangeurs.

Le débit de gaz naturel est de 113 930 Nm³/h (réduction de 0.8 % par rapport à l'exemple comparatif).

Le débit de vapeur pour le reformage à la vapeur est de 400 990 Nm³/h.

Le débit de vapeur de dilution est de 302 190 Nm³/h.

L'unité d'adsorption utilisée est constituée de 4 unités d'adsorption (15) en parallèle comportant chacune 6 capacités.

En terme de performance globale le rendement énergétique globale est de 41,4 %. Le taux de capture de CO₂ est de 93,5%, cette valeur est supérieure à l'objectif de 90%.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone présent dans le flux obtenu à l'étape de conversion à la vapeur permettant de séparer le dioxyde de carbone du flux d'hydrogène,
- une étape de captage et de recyclage des impuretés présentes dans le flux d'hydrogène, réalisée dans une unité d'adsorption comprenant au moins deux adsorbeurs, la dite étape de captage et de recyclage comprenant au moins les phases successives suivantes :
- adsorption des impuretés sur le premier adsorbeur,
- décompression et régénération du premier adsorbeur,
- adsorption des impuretés sur le deuxième adsorbeur.
ladite phase de décompression étant réalisée à une pression comprise entre 0,2 Mpa et 1,4 MPa, à une température comprise entre 20°C et 100°C, et à une vitesse comprise entre 0,05 MPa par minute et 2 MPa par minute, et la dite phase de décompression produisant un flux d'hydrogène qui est brulé dans l'unité de vaporeformage.

2. Procédé de production d'hydrogène selon la revendications 1, dans lequel la phase de décompression et régénération de l'adsorbeur est réalisée de la façon suivante:
- isolement du premier adsorbeur et mise en ligne du deuxième adsorbeur,
- décompression du premier adsorbeur, recompression et balayage du premier adsorbeur, avec un flux de charge hydrocarbonée destiné à servir de charge à l'unité de vaporéformage, et chauffé par échange avec de la vapeur d'eau destinée également à l'unité de vaporéformage, jusqu'à une température supérieure d'au moins 20°C à la température de condensation de la vapeur d'eau,
- régénération de l'adsorbeur réchauffé et désorption des impuretés par circulation de vapeur d'eau surchauffée d'au moins 20°C destinée à l'unité de vaporéformage,
- élimination de la vapeur d'eau présente dans l'adsorbeur régénéré par un balayage de l'adsorbeur avec un flux d'hydrogène pur et chaud, produisant un flux d'hydrogène chaud et saturé en vapeur d'eau,
- balayage de l'adsorbeur débarrassé de la vapeur d'eau par un flux d'hydrogène pur et froid.

3. Procédé de production d'hydrogène selon la revendication 2, dans lequel la phase de décompression produit un flux d'hydrogène envoyé en mélange avec une partie du flux d'hydrogène chaud et saturé en vapeur d'eau, obtenu après balayage de l'adsorbeur régénéré, qui est brulé dans l'unité de vaporeformage.

4. Procédé de production d'hydrogène selon une des revendications 2 à 3, dans lequel, à l'issu de l'élimination de la vapeur d'eau, une partie du flux d'hydrogène chaud et saturé en vapeur d'eau est brulé dans l'unité de réformage, et l'autre partie du flux d'hydrogène est envoyé en mélange avec de la vapeur d'eau de dilution vers une turbine à gaz pour produire de l'électricité.

5. Procédé de production d'hydrogène selon une des revendications 2 à 3, dans lequel, à l'issu de l'élimination de la vapeur d'eau, une partie du flux d'hydrogène obtenu après le balayage de l'adsorbeur régénéré est envoyé vers une unité extérieure, tandis que le reste de l'hydrogène est utilisé pour le balayage chaud, puis envoyé vers les brûleurs de l'unité de réformage.

6. Procédé de production d'hydrogène selon une des revendications 2 à 5, dans lequel, à l'issu du balayage avec l'hydrogène froid, le flux d'hydrogène réchauffé obtenu après la phase de refroidissement de l'adsorbeur est à nouveau réchauffé par échange avec de la vapeur d'eau et utilisé dans la phase d'élimination de la vapeur d'eau présente dans l'adsorbeur.

7. Procédé de production d'hydrogène selon une des revendications 1 à 6, dans lequel la charge hydrocarbonée est du gaz naturel.

8. Procédé de production d'hydrogène selon une des revendications 1 à 7, dans lequel les impuretés adsorbées sont du méthane, du dioxyde de carbone et du monoxyde de carbone.

9. Procédé de production d'hydrogène selon une des revendications 1 à 8, dans lequel l'étape de production du gaz de synthèse est réalisée à une pression comprise entre 2,5 MPa et 3,5 MPa.

10. Procédé de production d'hydrogène selon une des revendications 1 à 9, dans lequel l'étape de captage du dioxyde de carbone est réalisée dans une unité d'amine utilisant de la méthyldiéthylamine et au moins une autre amine.

## Patentansprüche

1. Verfahren zur Erzeugung von Wasserstoff aus einer Kohlenwasserstoffcharge und Wasserdampf, umfassend:
- einen Schritt der Erzeugung eines Synthesegases in einer Einheit zur Dampfreformierung des Kohlenwasserstoffcharge in Gegenwart des Wasserdampfes, wobei ein Brennstoff die für die Reaktion notwendige Wärme liefert,
- einen Schritt der Dampfumwandlung des in dem vorhergehenden Schritt erhaltenen Synthesegases, wodurch ein Wasserstoffstrom erzeugt wird, der Methan und Kohlendioxid enthält,
- einen Schritt der Abscheidung des in dem im Dampfumwandlungsschritt erhaltenen Stroms enthaltenen Kohlendioxids, der es ermöglicht, das Kohlendioxid vom Wasserstoffstrom zu trennen,
- einen Schritt der Abscheidung und Rezyklierung der in dem Wasserstoffstrom enthaltenen Verunreinigungen, der in einer Adsorptionseinheit, umfassend mindestens zwei Adsorber, erfolgt, wobei der Schritt der Abscheidung und Rezyklierung nacheinander mindestens die folgenden Phasen umfasst:
- Adsorption der Verunreinigungen am ersten Adsorber,
- Dekompression und Regeneration des ersten Adsorbers,
- Adsorption der Verunreinigungen am zweiten Adsorber,
wobei die Dekompressionsphase bei einem Druck zwischen 0,2 MPa und 1,4 MPa, bei einer Temperatur zwischen 20°C und 100°C und bei einer Geschwindigkeit zwischen 0,05 MPa pro Minute und 2 MPa pro Minute erfolgt, und wobei die Dekompressionsphase einen Wasserstoffstrom erzeugt, der in der Einheit zur Dampfreformierung verbrannt wird.

2. Verfahren zur Erzeugung von Wasserstoff nach Anspruch 1, bei dem die Phase der Dekompression und Regeneration des Adsorbers auf folgende Weise durchgeführt wird:
- Aus der Linie-Nehmen des ersten Adsorbers und In die Linie-Schaltens des zweiten Adsorbers,
- Dekompression des ersten Adsorbers, Rekompression und Spülen des ersten Adsorbers mit einem Strom eines Kohlenwasserstoffcharge, die dazu bestimmt ist, als Charge für die Einheit zur Dampfreformierung zu dienen, und durch Austausch mit Wasserdampf, der ebenfalls für die Einheit zur Dampfreformierung bestimmt ist, auf eine Temperatur um mindestens 20°C über der Kondensationstemperatur de s Wasserdampfes erhitzt wird,
- Regeneration des erhitzten Adsorbers und Desorption der Verunreinigungen durch Zirkulation von um mindestens 20°C überhitztem Wasserdampf, der für die Einheit zur Dampfreformierung bestimmt ist,
- Beseitigung des in dem regenerierten Adsorber vorhandenen Wasserdampfes durch ein Spülen des Adsorbers mit einem reinen und heißen Wasserstoffstrom, wodurch ein heißer und mit Wasserdampf gesättigter Wasserstoffstrom erzeugt wird,
- Spülen des von dem Wasserdampf befreiten Adsorbers mit einem reinen und kalten Wasserstoffstrom.

3. Verfahren zur Erzeugung von Wasserstoff nach Anspruch 2, bei dem die Dekompressionsphase einen Wasserstoffstrom erzeugt, der im Gemisch mit einem Teil des heißen und mit Wasserdampf gesättigten Wasserstoffstroms, der nach Spülen des regenerierten Adsorbers erhalten wird, geschickt wird, der in der Einheit zur Dampfreformierung verbrannt wird.

4. Verfahren zur Erzeugung von Wasserstoff nach einem der Ansprüche 2 bis 3, bei dem nach der Beseitigung des Wasserdampfes ein Teil des heißen und mit Wasserdampf gesättigten Wasserstoffstroms in der Reformierungseinheit verbrannt wird, und der andere Teil des Wasserstoffstroms im Gemisch mit verdünntem Wasserdampf zu einer Gasturbine zur Stromerzeugung geschickt wird.

5. Verfahren zur Erzeugung von Wasserstoff nach einem der Ansprüche 2 bis 3, bei dem nach der Beseitigung des Wasserdampfes ein Teil des nach dem Spülen des regenerierten Adsorbers erhaltenen Wasserstoffstroms zu einer externen Einheit geschickt wird, während der Rest des Wasserstoffs für das Heißspülen verwendet und dann zu den Brennern der Reformierungseinheit geschickt wird.

6. Verfahren zur Erzeugung von Wasserstoff nach einem der Ansprüche 2 bis 5, bei dem nach dem Spülen mit kaltem Wasserstoff der erhitzte Wasserstoffstrom, der nach der Abkühlungsphase des Adsorbers erhalten wird, durch Austausch mit Wasserdampf wieder erhitzt und in der Phase der Beseitigung des in dem Adsorber vorhandenen Wasserdampfes verwendet wird.

7. Verfahren zur Erzeugung von Wasserstoff nach einem der Ansprüche 1 bis 6, bei dem die Kohlenwasserstoffcharge Erdgas ist.

8. Verfahren zur Erzeugung von Wasserstoff nach einem der Ansprüche 1 bis 7, bei dem die adsorbierten Verunreinigungen Methan, Kohlendioxid und Kohlenmonoxid sind.

9. Verfahren zur Erzeugung von Wasserstoff nach einem der Ansprüche 1 bis 8, bei dem der Schritt der Erzeugung des Synthesegases bei einem Druck zwischen 2,5 MPa und 3,5 MPa durchgeführt wird.

10. Verfahren zur Erzeugung von Wasserstoff nach einem der Ansprüche 1 bis 9, bei dem der Schritt der Abscheidung des Kohlendioxids in einer Amineinheit erfolgt, die Methyldiethylamin und mindestens ein weiteres Amin verwendet.

## Claims

1. A process for the production of hydrogen starting from a hydrocarbon feed and steam, comprising:
- a step for producing a synthesis gas in a unit for steam reforming the hydrocarbon feed in the presence of steam, with a fuel providing the heat necessary for the reaction,
- a step for steam conversion of the synthesis gas obtained from the preceding step, producing a stream of hydrogen containing methane and carbon dioxide,
- a step for capturing carbon dioxide present in the stream obtained from the steam conversion step in order to separate the carbon dioxide from the stream of hydrogen,
- a step for capturing and recycling the impurities present in the stream of hydrogen, comprising at least two adsorbers, said capture and recycling step comprising at least the following phases in succession:
- adsorption of the impurities on the first adsorber,
- decompression and regeneration of the first adsorber,
- adsorption of the impurities on the second adsorber,
said decompression phase being carried out at a pressure in the range 0.2 MPa to 1.4 MPa, at a temperature in the range 20°C to 100°C, and at a rate in the range 0.05 MPa per minute to 2 MPa per minute, and said decompression phase producing a stream of hydrogen which is burned in the steam reforming unit.

2. The process for the production of hydrogen as claimed in claim 1, in which the phase for decompression and regeneration of the adsorber is carried out as follows:
- isolation of the first adsorber and placing the second adsorber online,
- decompression of the first adsorber, recompression and flushing of the first adsorber with a stream of hydrocarbon feed intended to serve as a feed for the steam reforming unit, and heating by exchange with steam also intended for the steam reforming unit up to a temperature which is at least 20°C higher than the condensation temperature of the steam,
- regeneration of the reheated adsorber and desorption of the impurities by circulating steam superheated by at least 20°C intended for the steam reforming unit,
- elimination of the steam present in the regenerated adsorber by flushing the adsorber with a stream of pure and hot hydrogen, producing a stream of hot hydrogen which is saturated with steam,
- flushing the adsorber which has been freed from the steam with a stream of pure and cold hydrogen.

3. The process for the production of hydrogen as claimed in claim 2, in which the decompression phase produces a stream of hydrogen sent as a mixture with a portion of a stream of hydrogen which is hot and saturated with steam, obtained after flushing the regenerated adsorber, which is burned in the steam reforming unit.

4. The process for the production of hydrogen as claimed in claim 2 or claim 3 in which, following the elimination of the steam, a portion of the stream of hydrogen which is hot and saturated with steam which is obtained is burned in the reforming unit, and the other portion of the stream of hydrogen is sent as a mixture with diluting steam to a gas turbine in order to produce electricity.

5. The process for the production of hydrogen as claimed in claim 2 or claim 3 in which, when the steam has been eliminated, a portion of the stream of hydrogen obtained after flushing the regenerated adsorber is sent to an external unit, while the remainder of the hydrogen is used for the hot flush, then sent to the burners of the reforming unit.

6. The process for the production of hydrogen as claimed in one of claims 2 to 5 in which, after flushing with cold hydrogen, the reheated stream of hydrogen obtained after the phase for cooling the adsorber is reheated again by exchange with steam and used in the phase for eliminating the steam present in the adsorber.

7. The process for the production of hydrogen as claimed in one of claims 1 to 6, in which the hydrocarbon feed is natural gas.

8. The process for the production of hydrogen as claimed in one of claims 1 to 7, in which the adsorbed impurities are methane, carbon dioxide and carbon monoxide.

9. The process for the production of hydrogen as claimed in one of claims 1 to 8, in which the step for the production of synthesis gas is carried out at a pressure in the range 2.5 MPa to 3.5 MPa.

10. The process for the production of hydrogen as claimed in one of claims 1 to 9, in which the step for capturing carbon dioxide is carried out in an amine unit using methyldiethylamine and at least one other amine.
